# FASCICULE DE BREVET EUROPEEN

(11) **EP 4 181 746 B1**
(45) Date de publication et mention de la délivrance du brevet: **28.08.2024**
(21) Numéro de dépôt: 21748540.8
(22) Date de dépôt: 15.07.2021
(51) Int. Cl.: A47J 37/06

(54) **DISPOSITIF DE CUISSON MULTI-USAGES**
MEHRZWECKKOCHGERÄT
MULTI-PURPOSE COOKING DEVICE

(30) Priorité: 20.07.2020 FR 2007609
(43) Date de publication de la demande: 24.05.2023
(73) Titulaire: Rivier, Paul, 74150 Rumilly (FR); Rivier, Bernadette, 74150 Rumilly (FR); Popp, Aurélie, 69005 Lyon (FR); Rivier, Judith, 92100 Boulogne-Billancourt (FR)
(72) Inventeur: RIVIER, Paul, 74150 RUMILLY (FR)
(74) Mandataire: Innovincia
(86) Numéro de dépôt international: PCT/EP2021/069815
(87) Numéro de publication internationale: WO 2022/017916

(56) Documents cités:
- CN-A- 108 309 073
- DE-A1- 3 024 831
- FR-A1- 2 579 869
- FR-A1- 2 609 161
- GB-A- 2 080 097
- US-A- 1 745 340

## Description

L'invention se rapporte à un dispositif de cuisson multifonctions, en particulier à un dispositif pouvant servir de four, de grille-pain, d'appareil à raclette et de grill et/ou de plancha, et de plaque chauffante.

On connaît déjà dans l'état la technique, par exemple du document US 2 711 684 A, un dispositif de cuisson combinant les fonctions de grille-pain et de four. Ce dispositif connu peut se déplier d'une position grille-pain vers une position de grillade. Néanmoins, ces dispositifs sont très encombrants et d'usage très limité. De plus, en position dépliée, le dispositif repose avec ses faces directement sur le plan de travail de cuisine (ou la table). Ainsi, la chaleur émise par le dispositif peut abîmer le plan de travail (ou la table) par la conduction. Par ailleurs, la chaleur résiduelle présente sur l'une des faces du dispositif après l'utilisation souvent oblige l'utilisateur à attendre une certaine durée de temps avant de pouvoir déplacer le dispositif ou de le ranger.

Par ailleurs, le basculement du dispositif d'une position verticale (ex. grille-pain) vers une position horizontale (ex. grillade) nécessite un soulèvement total du dispositif ou une manoeuvre mécanique complexe, ce qui peut poser un problème de sécurité et d'ergonomie. Par ailleurs, dans cette configuration, le positionnement du dispositif est limité à une position verticale ou horizontale.

Enfin, les dispositifs de cuisson connus de l'état de la technique ne sont pas bien adaptés à l'évolution sociétale de nos jours. En effet, face à l'évolution des modes de vie et de s'alimenter chez soi, on mange de plus en plus en individuel. Souvent aussi, même les personnes d'un même foyer qui sont souvent en nombre réduit, une ou deux personnes, on mange à des moments décalés, seul ou à deux par exemple. On utilise aussi de plus en plus des préparations individuelles, réalisées soi-même ou à réchauffer, à cuire, ou à griller dans un four qui est trop grand, trop lent, et trop consommateur énergie.

En effet, les appareils traditionnels ne sont pas adaptés pour chauffer ou griller un plat pour peu de personnes et trop d'énergie est consommée par la dimension et l'inertie de l'appareil (par exemple four traditionnel avec en plus un temps trop long).

Un micro-onde s'avère souvent inadapté au résultat et à la saveur.

On est aussi toujours dans l'obligation de se déplacer pour vérifier le moment où on peut consommer et donc se servir sur la table de consommation, ou à proximité. Le document DE 30 24 831 A1 décrit un autre exemple de dispositif de cuisson.

La présente invention vise à résoudre au moins partiellement la plupart de ces inconvénients.

L'invention a notamment pour but de proposer un dispositif de cuisson, d'un usage beaucoup en particulier plus fonctionnel et universel ainsi qu'avec une meilleure sécurité et ergonomie, tout en réduisant l'encombrement du dispositif.

À cet effet l'invention a pour objet un dispositif de cuisson caractérisé en ce qu'il comporte :
- un corps comprenant un compartiment central ayant une forme générale d'un parallélépipède rectangle et muni d'une ouverture et d'un fond, ledit corps comprenant des résistances de chauffage pour chauffer ou griller un aliment inséré dans le compartiment ;
- au moins une plaque de cuisson portée par une face latérale externe du corps parallèle à un plan défini par le parallélépipède rectangle ; et
- un socle formé par une base et au moins un montant, le corps étant articulé de façon pivotante sur le montant à l'aide d'une articulation, de telle manière que le corps puisse basculer entre une première et une deuxième positions perpendiculaires entre elles pour permettre des cuissons / grillade / réchauffage d'aliments différents.

Ainsi, le dispositif de cuisson est peu encombrant, car ses dimensions d'encombrement en position verticale sont celles d'un grille-pain classique. Par ailleurs, le dispositif étant surélevé par rapport au plan de travail (ou de la table), il peut basculer d'une position à une autre avec facilité en un simple mouvement de rotation, sans que l'utilisateur ait besoin de le soulever ou d'effectuer une manoeuvre complexe. En fait, plusieurs positions angulaires du dispositif peuvent être envisagées autour de l'axe de pivot. En outre, la position surélevée du dispositif empêche le contact direct entre le plan de travail et l'une des surfaces du dispositif. De surcroît, la présence du socle forme une grande poignée robuste de transport du dispositif.

Le dispositif de cuisson permet en particulier par sa modularité (en vertical ou horizontal sans risque pour l'utilisateur de se brûler), et son faible encombrement de limiter la consommation énergétique tout en offrant un niveau de sécurité d'utilisation maximale tant pour une utilisation sur un plan de travail que sur le plan de consommation (la table). Il peut servir pour une personne jusqu'à trois, en restant dans le même concept. Et même sans perdre ses avantages, il peut servir en même temps plus de convives (4 personnes, par exemple pour la raclette, ou pour un repas plus classique selon le menu choisi, ou plus convivial en le mettant donc au milieu de la table, avec des menus diversifiés).

A lui seul, par sa modularité, il peut économiser en plus l'achat de divers autres appareils qu'il remplace, et en plus avantageusement par l'apport des services nouveaux.

Le dispositif de cuisson selon l'invention peut présenter en outre une ou plusieurs des caractéristiques suivantes prises seules ou en combinaison.

Le fond du compartiment est amovible.

De cette façon, le nettoyage de l'intérieur du compartiment après l'utilisation du dispositif est facilité. En particulier, on peut évacuer facilement des fragments d'aliments ou de miettes de pain situés à l'intérieur du compartiment. Par ailleurs, lorsque le corps du dispositif est en position horizontale, l'utilisateur situé de l'autre côté de l'ouverture du compartiment peut surveiller la cuisson et/ou le réchauffage de plat à l'intérieur du compartiment en enlevant le fond de celui-ci sans déplacer l'ensemble du dispositif ou sans pivoter le corps du dispositif. En particulier, cette configuration est adaptée pour l'utilisation du dispositif comme un appareil à raclette avec des coupelles à raclette classiques pouvant être insérées de l'ouverture et du fond du compartiment.

Le dispositif comporte un volet de fermeture du compartiment.

Ainsi, le compartiment forme un four et peut être fermé et être isolé du milieu environnant afin d'accélérer la cuisson et/ou le réchauffage. Par ailleurs, avec le volet, on peut empêcher que des poussières et salissures soient introduites dans le compartiment pendant l'utilisation du dispositif ou après le rangement de celui-ci.

La base du socle est munie d'un organe anti - basculement du dispositif.

Ainsi, l'organe anti-basculement augmente la stabilité du dispositif, tout en empêchant qu'il soit renversé.

L'articulation est équipée d'un organe d'indexage des première et deuxième positions pour maintenir le corps dans ces positions.

Ainsi le corps peut être verrouillé à l'aide de l'organe d'indexage à une position angulaire donnée et ce jusqu'à un déverrouillage de l'organe.

Le dispositif comprend un organe de sécurité électrique destiné à couper l'alimentation du dispositif lorsque l'organe d'indexage n'est pas verrouillé.

L'organe de sécurité électrique est destiné à couper l'alimentation du dispositif lorsque la base du socle du est soulevée, basculée ou inclinée.

Ainsi l'organe de sécurité électrique empêche que la cuisson d'aliment débute dans une condition susceptible de provoquer un accident. Si la cuisson a déjà commencé, l'accident peut être ainsi minimisé.

La plaque de cuisson est amovible.

Ainsi, on peut nettoyer la plaque de cuisson séparément du dispositif.

Le socle comprend au moins deux montants, le corps étant disposé entre les deux montants et fixé à ces derniers par l'intermédiaire d'une articulation associée.

Ainsi, la présence d'au moins deux montants assure un équilibre du dispositif satisfaisant.

Au moins un réflecteur amovible est agencé dans le compartiment.

Ainsi, de façon générale, le réflecteur permet de réfléchir des rayonnements issus des résistances de chauffage à des directions précises ou de façon isotrope afin d'avoir une cuisson plus homogène d'aliment ou de plat dans le compartiment. De plus, l'amovibilité du réflecteur permet de mieux nettoyer celui-ci.

La plaque de cuisson est lisse ou ondulée.

Elle peut être intégrée dans le dessus de l'appareil ou débordante au-dessus des montants et sur l'avant et l'arrière afin d'augmenter la surface de la plaque supérieure par des zones moins chaudes pour la fonction grill/barbecue ou assimilé.

Ainsi la forme de la plaque de cuisson est adaptée pour différents types de cuissons.

Les résistances de chauffage sont communes pour la plaque de cuisson et le compartiment.

Ainsi, il est possible de cuire et de réchauffer des plats sur la plaque de cuisson et dans le compartiment de façon simultanée et économe en énergie. Par ailleurs, on peut réduire l'encombrement du dispositif.

Le dispositif comprend un circuit de contrôle pour choisir le mode de cuisson du compartiment et de la plaque de cuisson.

Les résistances de chauffage comprennent des zones de chauffage qui peuvent s'activer de manière préférentielle par le circuit de contrôle en fonction de l'angle de l'inclinaison du corps.

Par ailleurs, le circuit de contrôle est destiné à optimiser la chaleur émise par chaque zone de chauffage en fonction de l'angle de l'inclinaison du corps.

Ainsi, la cuisson et le réchauffage de plat dans le compartiment et/ou sur la plaque de cuisson peuvent être accélérés en n'activant que partiellement les zones de chauffage des résistances, et ce au moindre coût énergétique.

Alternativement, la surface externe du socle est enduite d'un revêtement isolant et/ou le socle est en matériau isolant.

Ainsi, après avoir utilisé le dispositif, l'utilisateur peut le porter par le socle sans se brûler la main.

La hauteur du corps par rapport à la base du socle peut être ajustée.

Ainsi, le corps peut basculer d'une position vers une autre position sans qu'il effleure la base du socle. Par ailleurs, l'ajustement de la hauteur du corps permet l'utilisation du dispositif pour un plan de travail (ou une table de consommation) de différentes hauteurs.

Le corps est amovible par rapport au socle.

Ainsi, on peut ranger le dispositif avec un encombrement encore plus réduit.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective du dispositif de cuisson en position verticale.
[Fig. 2] la figure 2 est une vue en perspective du dispositif de cuisson en position horizontale.
Les figures 3A, B et C sont des vues du dispositif de cuisson selon un mode de réalisation de l'invention à des différentes inclinaisons.

Plus particulièrement :

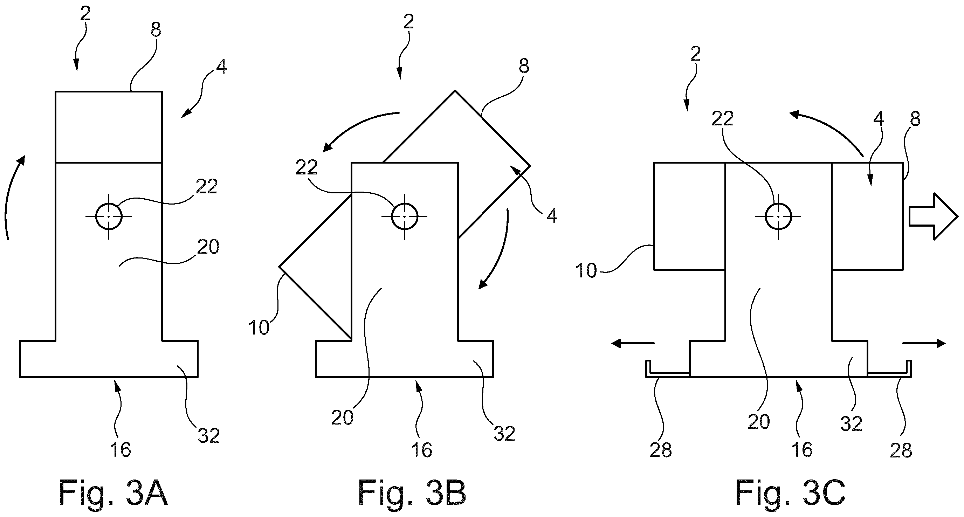

[Fig. 3A] la figure 3A est une vue de gauche du dispositif de cuisson en position verticale.
[Fig. 3B] la figure 3B est une vue de gauche du dispositif de cuisson en position inclinée.
[Fig. 3C] la figure 3C est une vue de gauche du dispositif de cuisson en position horizontale.

### Description détaillée

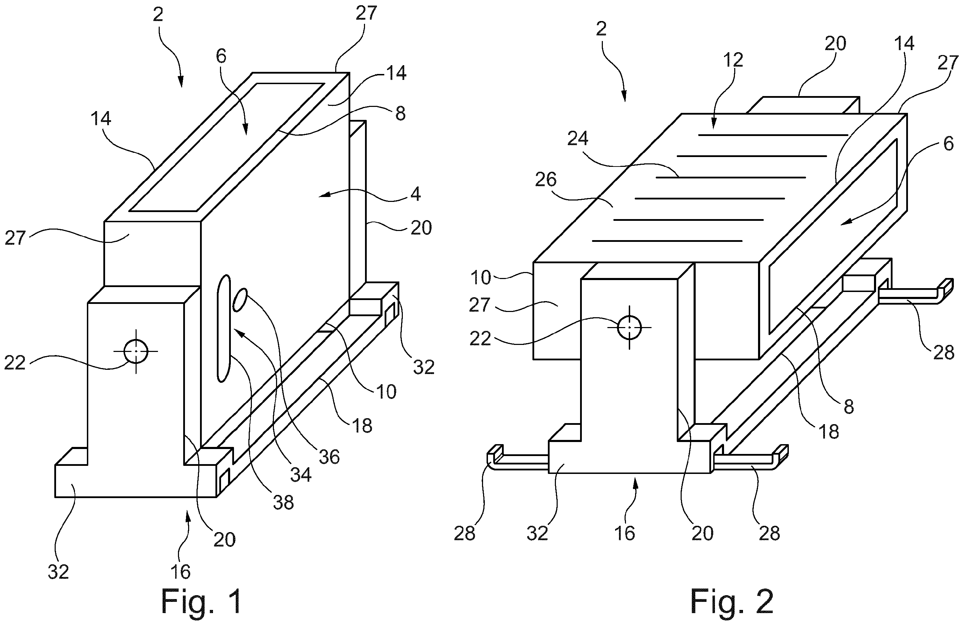

On a représenté sur les figures 1 à 2 un dispositif de cuisson selon un mode de réalisation désigné par la référence générale 2.

Le dispositif de cuisson 2 comporte un corps 4 qui comprend un compartiment 6 central ayant une forme générale d'un parallélépipède rectangle et muni d'une ouverture 8 et d'un fond 10. Le corps 4 comprend des résistances de chauffage (non-représentées) pour chauffer ou griller un aliment inséré dans le compartiment 6. Les résistances sont situées, préférentiellement sur les parois internes (non-représentées) du corps 4.

Le corps 4 ou le compartiment 6 est préférentiellement de forme générale parallélépipédique, de préférence parallélépipédique rectangulaire.

Le dispositif de cuisson 2 comprend en outre une plaque 12 de cuisson portée par une face latérale externe du corps 4 parallèle à un plan défini par le parallélépipède rectangle, préférentiellement les faces 14 adjacentes et perpendiculaires à l'ouverture 8 du compartiment 6. En particulier, la plaque 12 de cuisson est amovible afin de faciliter son nettoyage. Avantageusement, la plaque 12 de cuisson est vêtue d'un film antiadhésif classique de type polytétrafluroéthylène (PTFE) connu sous le nom Tefal ou Téflon (marques déposées).

Par ailleurs, la plaque 12 de cuisson peut être lisse ou ondulée. Dans cet exemple, la plaque 12 comporte des zones lisses 24 ou ondulées 26. Ce type de plaque 12 est adaptée pour différents types de cuissons.

On peut aussi prévoir que la plaque 12 cuisson est munie d'une poignée (non-représentée) amovible.

La plaque 12 peut également être débordante sur les côtés afin d'agrandir en continu cette surface utile.

Le dispositif 2 comprend aussi un socle 16 formé par une base 18 et au moins un montant 20, avantageusement au moins deux montants 20 en référence aux figures 1 et 2. Le corps 4 est articulé de façon pivotante sur les deux montants 20 du socle 16 à l'aide d'une articulation 22. Ainsi le corps 4 peut basculer autour d'un axe de pivotement qui est notamment perpendiculaire aux montants 20, entre une première et une deuxième positions perpendiculaires entre elles pour permettre des cuissons / grillade / réchauffage d'aliments différents. En référence aux figures 1 et 2, on voit que le corps 4 peut être en position verticale destinée, par exemple, à griller le pain (voir figure 1) ou en position horizontale destinée à la cuisson et au réchauffage de plat (ex. position horizontale, voir figure 2).

Le corps 4 est amovible par rapport au socle 16. Ainsi, on peut ranger le dispositif 2 avec un encombrement encore plus réduit.

Bien entendu, sans sortir du cadre de la présente invention, le corps 4 peut être d'un gabarit plus large que la largeur des montants 20 du socle 16. De plus, on peut prévoir d'agencer deux bras sur le corps 4 de sorte que ce dernier soit déporté par rapport à l'axe de pivotement. De la sorte, lors d'un basculement ou pivotement vers la position horizontale, le corps 4 se trouve encore plus en hauteur et éloigné de la table de consommation ou du plan de travail. Cela permet également de placer dans cette position horizontale un plat sous le corps 4, qui permettrait de recueillir par exemple des graisses chaudes.

Le dispositif 2 peut comporter un volet de fermeture (non-représenté) du compartiment 6. Le volet est situé, préférentiellement, à proximité de l'ouverture 8 du compartiment 6. Avantageusement, la fermeture du volet se fait de manière étanche. Ainsi, le compartiment 6 forme un four et peut être fermé et être isolé du milieu environnant afin d'accélérer la cuisson et/ou le réchauffage. Par ailleurs, avec le volet, on peut empêcher que des poussières et salissures soient introduites dans le compartiment 6 pendant l'utilisation du dispositif 2 ou après le rangement de celui-ci.

Selon un autre développement, ce volet de fermeture peut être solidaire d'un plat contenant les aliments à chauffer dans ce compartiment ou être formé par une paroi d'un plat contenant les aliments à chauffer dans ce compartiment.

Avantageusement, chaque articulation 22 coopère avec l'une des deux faces 27 adjacentes à la plaque 12 de cuisson, les faces 27 adjacentes étant, de manière préférentielle, distinctes des faces parallèles à l'ouverture 8 du compartiment 6. La base 18 du socle 16 est munie d'un organe 28 anti-basculement du dispositif 2. En se référant à la figure 2, l'organe 28 anti-basculement est muni de paires de tiges 30 rétractables qui sont situées, préférentiellement à proximité de l'assise 32 de chaque montant 20, ou bien dans la base 18 du socle 16.

Le dispositif 2 comprend en outre un organe 34 d'extraction d'aliments (ex. pain, tartelette etc.) du compartiment 6. L'organe 34 d'extraction comprend un bouton poussoir 36 pouvant, de préférence, être actionné manuellement ou automatiquement à l'aide d'un minuteur programmable (non-représenté). Le bouton poussoir 36 est agencé pour coopérer avec un dispositif 38 de guidage, de préférence muni d'un ressort, permettant d'éjecter le contenu du compartiment 6 quel que soit la position angulaire du corps 4.

La hauteur du corps 4 par rapport à la base 18 du socle 16 peut être ajustée. L'ajustement de la hauteur du corps 4 peut se faire à l'aide d'un système classique (non-représenté), de type glissière avec une vis de fixation ou de type glissière crantée. Ainsi, le corps 4 peut basculer d'une position vers une autre position sans qu'il effleure la base 18 du socle 16. Par ailleurs, l'ajustement de la hauteur du corps 4 permet l'utilisation du dispositif 2 pour un plan de travail (ou une table de consommation) de différentes hauteurs.

De façon générale, les dimensions d'encombrement du dispositif 2 de cuisson sont celles d'un grille-pain classique, en position verticale.

En position horizontale et du fait du mécanisme de basculement, la sécurité d'utilisation est bien respecté pour permettre une utilisation aisée sur un plan de travail ou sur la table de consommation.

Selon un autre mode de réalisation, les dimensions du dispositif 2 peuvent varier, notamment en position horizontale, sans changer l'emprise au plan de travail. De manière préférée, l'espace occupé par la base 18 du socle 16 et l'organe 28 anti-basculement est inchangé. Avantageusement, les largeur et hauteur de la plaque 12 de cuisson sont ajustables lorsque le corps 4 est en position horizontale. Par exemple, on peut prévoir que la plaque 12 de cuisson est pliable à l'aide de charnières (non-représentées). Les charnières sont, de préférence invisibles. En outre, on peut prévoir que plusieurs couches de métal ou de céramique peuvent former la plaque 12 de cuisson, de telle manière que chaque couche puisse glisser les unes sur les autres jusqu'à la fin de la course de chaque couche au moment de l'extension de la plaque 12

Avantageusement, le dispositif 2 comporte un câble d'alimentation (non-représenté) qui peut s'enrouler sur lui-même sans gêner la rotation du corps 4 autour de l'axe de pivot. Dans un mode de réalisation alternatif, le câble est amovible du corps 4 afin de réduire l'encombrement du dispositif 2 lors du rangement.

Sur les figures 3A à 3C, on voit trois positions distinctes du corps 4 par rapport au socle 16, c'est-à-dire les positions verticale, inclinée et horizontale du corps 4. En particulier, les figures 3A et 3C correspondent aux vues de gauche du dispositif 2 des figures 1 et 2.

En référence à la figure 3B, le corps 4 peut être incliné à un angle intermédiaire entre ceux des positions verticale (figure 3A) et horizontale (figure 3C) du corps 4. Cette position inclinée peut servir avantageusement pour griller le pain, ou pour cuire et réchauffer un plat. A cette fin, l'articulation 22 est équipée d'un organe d'indexage (non-représenté) des première et deuxième positions pour maintenir le corps 4 dans ces positions. Le moyen d'indexage permet de régler la position angulaire du corps 4 à des angles prédéfinis. De façon corollaire, l'articulation 22 peut bloquer la rotation du corps 4 entre deux angles prédéfinis. D'une manière préférée, l'ajustement de la position angulaire peut se faire à un pas d'angle inférieur à 10 °, de préférence à un angle inférieur à 5 °. D'une manière préférée, le corps 4 peut être incliné à 0°, 45° et 90° par rapport à l'axe principal du montant 20 du socle 16.

Le dispositif 2 comprend un organe de sécurité électrique (non-représenté) destiné à couper l'alimentation du dispositif 2 lorsque l'organe d'indexage n'est pas verrouillé. L'organe de sécurité électrique est en outre destiné à couper l'alimentation du dispositif 2 lorsque la base 18 du socle 16 du est soulevée, basculée ou inclinée.

Ainsi l'organe de sécurité électrique empêche que la cuisson d'aliment débute dans une condition susceptible de provoquer un accident. Si la cuisson a déjà commencé, l'accident peut être ainsi minimisé.

Alternativement, la surface externe du socle 16 est enduite d'un revêtement isolant et/ou le socle est en matériau isolant. Le revêtement peut être en polymère, ou en céramique. Le polymère ou la céramique résistent à la chaleur habituelle dégagée par le dispositif 2 de cuisson et ils sont destinés à isoler efficacement la chaleur provenant du corps 4, en particulier des résistances de chauffage.

Le fond 10 du compartiment 6 est amovible. En référence aux figures 3A et 3B, on peut aisément évacuer des fragments d'aliments ou de miettes de pain situés à l'intérieur du compartiment 6 en enlevant le fond 10 de celui-ci. Par ailleurs, on voit sur les figures 2 et 3C que lorsque le corps 4 du dispositif 2 est en position horizontale, l'utilisateur situé de l'autre côté de l'ouverture 8 du compartiment 6 peut surveiller la cuisson et/ou le réchauffage de plat à l'intérieur du compartiment 6 en enlevant le fond 10 de celui-ci sans déplacer l'ensemble du dispositif 2 ou sans pivoter le corps 4 du dispositif 2. En particulier, cette configuration est adaptée pour l'utilisation du dispositif 2 comme un appareil à raclette avec des coupelles à raclette classiques pouvant être insérées de l'ouverture 8 et du fond 10 du compartiment 6.

De façon générale, les résistances de chauffage sont communes pour la plaque 12 de cuisson et le compartiment 6. Ainsi, il est possible de cuire et de réchauffer des plats sur la plaque 12 de cuisson et dans le compartiment 6 simultanément et de façon économe. La plaque 12 de cuisson est destinée aux modes de cuisson tels que le barbecue, la plancha et le réchauffage par contact.

Le dispositif 2 comprend un circuit de contrôle (non-représenté) pour choisir le mode de cuisson du compartiment 6 et de la plaque 12 de cuisson. Parmi les modes de cuisson, on peut prévoir, par exemple, de maintenir la température de cuisson constante (fonction « garde au chaud ») et d'effectuer une cuisson à vitesse classique ou rapide (fonction « boost »).

D'une part, la fonction « garde au chaud » est applicable pour un aliment directement en contact sur la plaque 12, ou un plat contenu dans un récipient, tel qu'un bol ou une casserole, destiné à être posé sur la plaque 12. Ce mode de maintien en température est également disponible pour la cuisson dans le compartiment 6.

D'autre part, la cuisson à vitesse rapide est destinée à cuire préférentiellement la surface de l'aliment, et ainsi à préserver le coeur de l'aliment, aussi bien dans le compartiment 6 que sur la plaque 12 de cuisson.

Dans le corps 4, on peut prévoir les résistances de chauffage émettent dans des longueurs d'onde distinctes pour griller le pain ou pour la cuisson et le réchauffage de plat. En outre, le compartiment 6 peut comprendre au moins un réflecteur amovible (non-représenté) qui est agencé dans le compartiment 6. Le revêtement du réflecteur est destiné à réfléchir des rayonnements de différentes longueurs d'onde pour griller le pain ou pour la cuisson et le réchauffage de plat.

Les modes d'émission de chaleur par les résistances de chauffage concernent le rayonnement et/ou le contact direct. En particulier, le chauffage par rayonnement est de préférence utilisé pour griller le pain en position verticale ou inclinée, ou pour la cuisson et/ou le réchauffage sur la plaque 12. Le contact direct peut être utilisé en position horizontale ou inclinée pour cuire ou réchauffer le plat à l'intérieur du compartiment 6, avec des grilles (non-représentées) amovibles.

Les résistances de chauffage comprennent en outre des zones de chauffage qui peuvent s'activer de manière préférentielle par le circuit de contrôle en fonction de l'angle de l'inclinaison du corps 4. Par ailleurs, le circuit de contrôle peut optimiser la chaleur émise par chaque zone de chauffage en fonction de l'angle d'inclinaison du corps 4. Ainsi, la cuisson et le réchauffage de plat dans le compartiment 6 et/ou sur la plaque 12 de cuisson peuvent être accélérés à un angle donné en n'activant que partiellement les zones de chauffage des résistances de chauffage, et ce au moindre coût énergétique. Par exemple, lorsque le corps 4 est en position horizontale, on peut prévoir que les résistances situées sur les parois internes du corps 4 supérieure et inférieure sont préférentiellement activées. On peut également prévoir dans cet exemple que ces résistances supérieure et inférieure sont préférentiellement alimentées.

En résumé, on comprend donc que le dispositif 2 est un appareil de cuisson polyvalent à un encombrement faible et à un prix d'achat accessible. Le dispositif 2 peut être particulièrement adapté aux personnes cherchant à minimiser le nombre d'appareils ménagers de cuisson dans leur lieu d'habitation, tout en souhaitant avoir l'accès à la fonction de chaque appareil. Les caractéristiques du dispositif 2 telles que la polyvalence, l'économie d'énergie et le design minimaliste nécessitant peu de matières premières sont en totale adéquation avec le besoin du marché en phase avec les modes de vie moderne et la sensibilisation à l'écologie.

Grâce à la présence de la plaque 12 de cuisson et du compartiment 6, plusieurs modes de cuissons peuvent être envisagés. Par exemple, le grille-pain, un four (avec fonction « gratin »), la raclette avec au moins une voire trois ou quatre coupelles métalliques destinées à être insérée dans le compartiment 6, lorsque le corps 4 est en position horizontale, ou la grillade de viande et/ou plancha sur la plaque 12 de cuisson. A titre d'exemple, le dispositif 2 peut être utilisé pour les trois repas quotidiens. Autrement dit, comme un grille-pain pour le matin, comme une grillade pour le midi, et enfin, pour le soir, comme four pour le réchauffage des restes de plats du midi, ou comme une raclette.

D'une manière générale, la réduction de taille de l'appareil est favorable à un emploi peu énergivore par évitement de volumes inutiles, et d'inertie coûteuse en temps de chauffe nécessaire.

### Liste de références

2 : dispositif
4 : corps
6 : compartiment
8 : ouverture du compartiment
10 : fond du compartiment
12 : plaque de cuisson
14 : faces du corps adjacentes et perpendiculaires à l'ouverture du compartiment
16 : socle
18 : base du socle
20 : montant du socle
22 : articulation
24 : zone lisse de la plaque de cuisson
26 : zone ondulée de la plaque de cuisson
27 : faces adjacentes de la plaque de cuisson
28 : organe anti-basculement
30 : tiges rétractables
32 : assise de montant
34 : organe d'extraction d'aliments
36 : bouton poussoir
38 : dispositif de guidage

## Revendications

1. Dispositif (2) de cuisson comportant :
- un corps (4) comprenant un compartiment (6) central ayant une forme générale d'un parallélépipède rectangle et muni d'une ouverture (8) et d'un fond (10), ledit corps (4) comprenant des résistances de chauffage pour chauffer ou griller un aliment inséré dans le compartiment (6) ;
- au moins une plaque (12) de cuisson portée par une face latérale externe du corps parallèle à un plan défini par le parallélépipède rectangle ; le dispositif (2) de cuisson étant **caractérisé en ce qu'**il comporte:
- un socle (16) formé par une base (18) et au moins un montant (20), le corps (4) étant articulé de façon pivotante sur le montant (20) à l'aide d'une articulation (22), de telle manière que le corps (4) puisse basculer entre une première et une deuxième positions perpendiculaires entre elles pour permettre des cuissons / grillade / réchauffage d'aliments différents.

2. Dispositif selon la revendication 1, dans lequel le fond (10) du compartiment est amovible.

3. Dispositif selon la revendication 1 ou 2, dans lequel il comporte un volet de fermeture du compartiment (6)

4. Dispositif selon l'une quelconque des revendications 1 à 3, dans lequel l'articulation (22) est équipée d'un organe d'indexage des première et deuxième positions pour maintenir le corps (4) dans ces positions.

5. Dispositif selon l'une quelconque des revendications, dans lequel la plaque (12) de cuisson est amovible.

6. Dispositif selon l'une quelconque des revendications précédentes, dans lequel le socle (16) comprend au moins deux montants (20), le corps (4) étant disposé entre les deux montants (20) et fixé à ces derniers par l'intermédiaire d'une articulation (22) associée.

7. Dispositif selon l'une quelconque des revendications précédentes, dans lequel au moins un réflecteur amovible est agencé dans le compartiment (6).

8. Dispositif selon l'une quelconque des revendications précédentes, dans lequel la plaque (12) de cuisson est lisse ou ondulée.

9. Dispositif selon l'une quelconque des revendications précédentes, dans lequel les résistances de chauffage sont communes pour la plaque (12) de cuisson et le compartiment (6).

10. Dispositif selon l'une quelconque des revendications précédentes, comprenant un circuit de contrôle pour choisir le mode de cuisson du compartiment (6) et de la plaque (12) de cuisson.

## Patentansprüche

1. Kochvorrichtung (2), umfassend
- einen Körper (4) mit einem Mittelfach (6), das die allgemeine Form eines rechteckigen Parallelepipeds aufweist und mit einer Öffnung (8) und einem Boden (10) ausgestattet ist, wobei der Körper (4) Heizwiderstände zum Erhitzen oder Grillen eines in das Fach (6) hineingelegten Lebensmittels umfasst;
- mindestens eine Kochplatte (12), die von einer äußeren Seitenfläche des Körpers getragen wird, die parallel zu einer durch das rechteckige Parallelepiped definierten Ebene verläuft;
wobei die Kochvorrichtung (2) **dadurch gekennzeichnet ist, dass** sie Folgendes aufweist:
- einen Sockel (16), der durch eine Basis (18) und mindestens einen Pfosten (20) ausgebildet ist, wobei der Körper (4) mit Hilfe eines Gelenks (22) schwenkbar am Pfosten (20) angelenkt ist, sodass der Körper (4) zwischen einer ersten und einer zweiten Position, die senkrecht zueinander sind, kippen kann, um verschiedene Vorgänge des Kochens/ Grillens/Erwärmens von Lebensmitteln zu ermöglichen.

2. Vorrichtung nach Anspruch 1, wobei der Boden (10) des Fachs abnehmbar ist.

3. Vorrichtung nach Anspruch 1 oder 2, wobei sie eine Klappe zum Schließen des Fachs (6) aufweist.

4. Vorrichtung nach einem der Ansprüche 1 bis 3, wobei das Gelenk (22) mit einem Organ zum Indexieren der ersten und der zweiten Position ausgestattet ist, um den Körper (4) in diesen Positionen zu halten.

5. Vorrichtung nach einem der Ansprüche, wobei die Kochplatte (12) abnehmbar ist.

6. Vorrichtung nach einem der vorangehenden Ansprüche, wobei der Sockel (16) mindestens zwei Pfosten (20) umfasst, wobei der Körper (4) zwischen den beiden Pfosten (20) angeordnet und über ein zugehöriges Gelenk (22) an diesen befestigt ist.

7. Vorrichtung nach einem der vorangehenden Ansprüche, wobei im Fach (6) mindestens ein abnehmbarer Reflektor angeordnet ist.

8. Vorrichtung nach einem der vorangehenden Ansprüche, wobei die Kochplatte (12) glatt oder gewellt ist.

9. Vorrichtung nach einem der vorangehenden Ansprüche, wobei die Heizwiderstände für die Kochplatte (12) und das Fach (6) gemeinsam sind.

10. Vorrichtung nach einem der vorangehenden Ansprüche, umfassend eine Steuerschaltung zum Auswählen des Kochmodus des Fachs (6) und der Kochplatte (12).

## Claims

1. Cooking device (2) including:
- a body (4) comprising a central compartment (6) having an overall rectangular parallelepipedic shape and provided with an opening (8) and a bottom (10), said body (4) comprising heating resistors for heating or grilling a foodstuff inserted in the compartment (6),
- at least one cooking plate (12) carried by an outer side face of the body parallel to a plane defined by the rectangular parallelepiped, the cooking device (2) being **characterized in that** it includes:
- a stand (16) formed by a base (18) and at least one upright (20), the body (4) being articulated pivotingly on the upright (20) by means of an articulation (22) so that the body (4) can tilt between a first position and a second position that are perpendicular to one another to enable different foodstuffs to be cooked/grilled/heated.

2. Device according to Claim 1, wherein the bottom (10) of the compartment is removable.

3. Device according to Claim 1 or 2, wherein it includes a closing shutter for the compartment (6).

4. Device according to any one of Claims 1 to 3, wherein the articulation (22) is provided with an indexing member for the first and second positions to keep the body (4) in these positions.

5. Device according to any one of the claims, wherein the cooking plate (12) is removable.

6. Device according to any one of the preceding claims, wherein the stand (16) comprises at least two uprights (20), the body (4) being disposed between the two uprights (20) and fastened to said uprights by a related articulation (22).

7. Device according to any one of the preceding claims, wherein at least one removable reflector is arranged in the compartment (6).

8. Device according to any one of the preceding claims, wherein the cooking plate (12) is smooth or corrugated.

9. Device according to any one of the preceding claims, wherein the heating resistors are common to the cooking plate (12) and the compartment (6).

10. Device according to any one of the preceding claims, comprising a control circuit for selecting the cooking mode of the compartment (6) and of the cooking plate (12) .
